Europäisches Patentamt

European Patent Office

Office européen des brevets

(11) Publication number: **0 356 114**
**A2**

## EUROPEAN PATENT APPLICATION

(21) Application number: **89308277.6**

(22) Date of filing: **15.08.89**

(51) Int. Cl.⁵: **G 09 G 1/14**

(30) Priority: **23.08.88 US 235084**

(43) Date of publication of application:
**28.02.90 Bulletin 90/09**

(84) Designated Contracting States: **DE FR GB NL**

(71) Applicant: **TEKTRONIX, INC.**
**Howard Vollum Park 14150 S.W. Karl Braun Drive**
**Beaverton Oregon 97005 (US)**

(72) Inventor: **Szarkowski, Douglas P.**
**8514 S.W. Dakota Drive**
**Tualatin Oregon 97062 (US)**

(74) Representative: **Burke, Steven David et al**
**R.G.C. Jenkins & Co. 26 Caxton Street**
**London SW1H 0RJ (GB)**

(54) Scan conversion of straight lines.

(57) An algorithm converts true lines into a selection of coordinate points on an X and Y axis coordinate grid for representing integral coordinate points representative of the line. These coordinate points correspond to pixel locations for printing of an image on a print medium. The algorithm takes into account the true endpoints of the line to be represented and derives a variance value which accounts for the position of the true endpoints relative to the initial integral coordinate points selected. This variance value then is carried through the computational process for each coordinate point selection, so that the cumulative variance signal represents the offset of the initial line endpoint. The result is the representation by integral coordinate points which are aligned with the true line, and which represent collinear lines collinearly.

FIG. 3

EP 0 356 114 A2

**Description**

## SCAN CONVERSION OF STRAIGHT LINES

Field of the Invention

This invention relates to the conversion of raw data defining an image on an orthogonal coordinate grid into representations of the image by discrete coordinate points on the grid. More particularly, it relates to the conversion of data defining a straight line on a coordinate grid into a set of integral coordinate points representing that line.

Background of the Invention

The conversion of raw data represented by coordinate information into discrete points on the coordinate grid is generally referred to as scan conversion of the data. In a printing environment the coordinate points represent pixel locations for the printing of a picture on a print medium. The data is converted from a raw form into data which defines pixel locations printed as a print head scans across a print page. The location of a pixel-forming print element adjacent a corresponding pixel location on the print page either prints or does not print at the pixel location depending on the data received.

Algorithms for scan converting a line between endpoints are common for endpoints that are placed exactly on pixels, that is integer endpoints. The best known of these algorithms is the Bresenham algorithm. This algorithm attempts to minimize the amount of computation required to determine the coordinates of the pixels that lay along the line. To do this, three terms based on the slope of the line are determined and the octant in which the line is located is determined. The three terms are computed differently for each octant, but the general algorithm is the same. The first term is a variance or "error" term used to choose which of two pixels is closest to the true line. The other two terms are increments to the variance term after a pixel is chosen as being closest. Based on which pixel is chosen, one of the increment terms is added to the variance term to be used at the next iteration. The process of choosing the pixel and incrementing the variance term is repeated until the second endpoint is chosen as a pixel laying close to the line. This algorithm is provided specifically in Fundamentals of Interactive Computer Graphics, J. D. Foley and A. Van Dam, Addison-Wesley Publishing Company, Reading, Massachusetts, 1982, pp. 433-436.

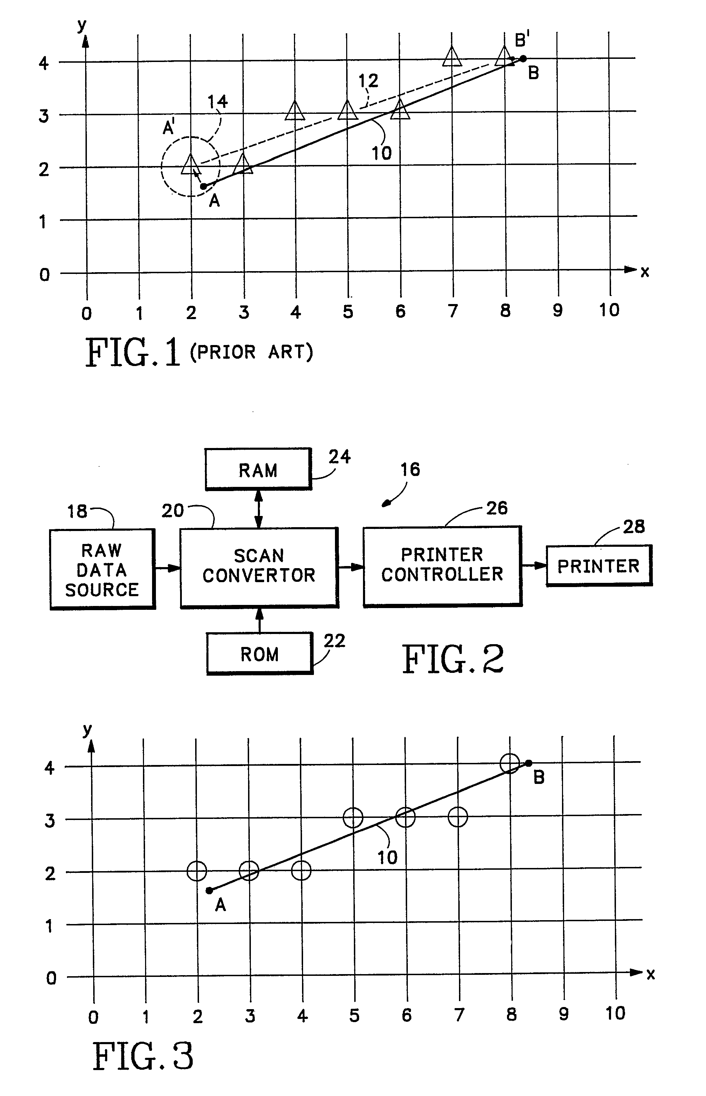

The initial computation of the variance term is based on the fact that the true line is shifted so that the endpoints are exactly on pixel locations, or integral coordinate points. One problem with this requirement is that it incorporates variation from the true line before scan conversion starts since arbitrary endpoints rounded to the nearest integral values are used. Thus, the line is assumed to extend between these two rounded endpoints, rather than the true endpoints. To the extent that the two endpoints are spaced from the true endpoints means that the remaining calculations will have an inherent bias against true line representation. As an example, Fig. 1 shows a portion of a two-dimensional coordinate grid with lines drawn at integral X and Y axis values. The line crossings represent integral coordinate points or pixel locations. A true line 10 extends between endpoints A and B. By rounding the endpoints, line AB is treated as extending from A' to B' which are located at the integral coordinate points (2, 2) and (8, 4), respectively. Dashed line 12 thus represents the actual line for which the computation of coordinate points is made using the Bresenham algorithm. The algorithm then generates the integral coordinate points identified by the triangles. These points represent pixel locations which will have pixels printed to represent that line. It can be seen that the effective appearance of the line will correspond more directly to line 12 rather than line 10.

Coordinate point A' has a dashed circle 14 around it. This circle is provided to illustrate the approximate size of a pixel which would be printed on an image. Each of the coordinate points selected would thus have a corresponding pixel printed, so that when viewed from a distance, the appearance of a continuous line, although with some obvious variations, is produced. Since the pixels are restricted in the locations at which they may be printed, to expedite the printing operation for conventional printing, it is necessary to represent lines in this fashion.

Summary of the Invention

It can be seen that it is desirable to accurately represent lines using discrete pixels so that the resulting image more accurately portrays the desired image. In order to eliminate inaccurate line rendition, an algorithm must allow for endpoints of the line that are not integers. This involves three changes to the conventional algorithm. The first is to choose a pixel location to start the main iteration loop which is closely in line with the true line. This may not be the closest pixel to the true line endpoint. The second is to adjust the initial variance term to exactly represent the position of the true line endpoint, consistent with the beginning pixel location chosen. The third is to modify the loop control since stopping at a true endpoint is not viable as the true endpoint may be somewhere between exact pixels.

In the preferred algorithm according to the invention, a variance term is first calculated assuming that the pixel location closest to a true endpoint will be the beginning pixel location. The distance and direction of the closest pixel location from the beginning endpoint are used in calculating the variance term. If this variance term is outside a range of defined increments, then a different beginning pixel location is chosen so that the resulting variance term is within the range of increments. As will be seen, the increments are chosen for adjusting the variance term depending on whether a sequential pixel location selection is made along the X axis or the Y axis.

When a different beginning pixel other than the closest pixel location must be chosen, there are only two choices. Which choice to use is determined directly from whether the variance term is above or below the range defined by the increments. The increments are based on the differences in the X and Y coordinates of the line endpoints. The difference between the X or Y coordinates of the true line, depending on the octant in which the line is positioned, is used to determine the number of iterations to perform.

The resulting set of pixels determined by the preferred algorithm lie along the true straight line to be represented, rather than a derived straight line having integral endpoints, as provided in the conventional algorithm. Such an algorithm results in a much truer representation of the straight line. Also, two lines which are collinear will in fact appear collinear under the algorithm made according to the present invention, whereas they can be other than collinear with other algorithms. These and other features and advantages of the present invention will become apparent from a review of the following detailed description of the preferred method and apparatus in conjunction with the associated drawings.

Brief Description of the Drawings

Fig. 1 is a chart illustrating pixel selection using a conventional algorithm.

Fig. 2 is a block diagram showing an apparatus in which the method of the invention is usable.

Fig. 3 represents pixel selection for a preferred algorithm performed according to the present invention for the same line represented in Fig. 1.

Fig. 4 represents an exemplary determination of pixel selection for two collinear lines using both the preferred algorithm of this invention and a conventional algorithm.

Figs. 5 and 6 illustrate selection of pixels where the pixel location closest to the true line endpoint is not the initial pixel location selected.

Detailed Description of the Preferred Embodiment

Referring initially to Fig. 2, an apparatus shown generally at 16 made according to the present invention is also usable for practicing the method of the present invention. The figure is general in that it is applicable to conventional printers which convert basic data information of an image or graphics format into corresponding pixel selections of a graphic display, such as is displayed on a monitor, or is printed on a print medium.

In such an apparatus, a raw data source 18 provides the input of whatever graphic information is desired. This source could simply be an input terminal of a computer wherein endpoint values are selected and entered, or where a graphics image may be scanned by a scanning device and information identifying the scanned image is derived. In creating graphic images, even though there are representations of curved lines which are desired, these conventionally are printed as a series of very short straight line segments. Thus the present algorithm is applicable to such a situation in determining the pixel locations for each line segment. Further, it is in such applications that it has particular advantage, as will be seen. This raw data source thus generates for each line segment a definition of the true endpoints of the line and is not restricted to an integral coordinate grid, as is required for determining pixel location.

A scan converter in the form of a processor 20, running on a program stored in a read only memory 22, receives the data from source 18 and may initially store it within memory internal to processor 20 or possibly into a random access memory 24. Once the actual pixel coordinate points are determined, they are fed as a data stream to a printer controller 26 for the entire image to be printed. The printer controller then relates the data to the individual printing elements, such as an ink jet, of a printer 28 as it scans a print medium. Thus, processor 20 in addition to providing scan conversion, as described herein, also converts textual information and other forms of graphic information into a predetermined coordinate grid, as is conventionally performed by printers.

One conventional printer in which this type of printing is provided is the printer having Model No. 4693 made by Tektronix, Inc. of Beaverton, Oregon. The scan conversion algorithm as herein defined may be used in place of the corresponding algorithm in that particular printer, or in a similar printer.

The following is a derivation of the variance value which is used in the preferred embodiment of the present invention. The coordinate grid on which the pixel locations are to be identified, is assumed to be an X/Y coordinate grid.

xf = x coordinate of the true endpoint minus the x coordinate of the closest pixel location.

yf = y coordinate of the true endpoint minus the y coordinate of the closest pixel location.

dy = y coordinate of the true end endpoint minus the y coordinate of the true beginning endpoint.

dx = x coordinate of the true end endpoint minus the x coordinate of the true beginning endpoint.

(r, q) represents the coordinates of the last selected pixel location.

$$s = (dy/dx)(r + 1 - xf) - (q - yf)$$
$$t = q + 1 - yf - (dy/dx)(r + 1 - xf)$$
$$s - t = 2(dy/dx)(r + 1 - xf) - 2q + 2yf - 1$$
$$dx(s - t) = 2dy(r + 1 - xf) - 2q\,dx + 2yf\,dx - dx = 2r\,dy + 2dy - 2dy\,xf - 2q\,dx + 2yf\,dx - dx$$

Defining $d_i = dx(s - t)$ and $x_{i-1} = r$ and $y_{i-1} = q$ gives

$$d_i = 2x_{i-1}\,dy + 2dy - 2dy\,xf - 2y_{i-1}\,dx + 2yf\,dx - dx$$

Evaluating for $d_1$ with $(x_0, y_0) = (0, 0)$ gives $d_1 = 2\,dy - 2\,dy\,xf + 2\,yf\,dx - dx$

Using these equations, the closest pixel to the true beginning endpoint may produce a variance value which is outside the selected range of increments. The increments are defined to be incr1 = 2 *dy and incr2 = 2 *(dy - dx). These increments define a range within which pixel selection is to be determined as progression is made from one end of the true line to the other end. In a situation where the initial selection of a coordinate point produces a variance signal which is outside of the range, then the term (1 - yf) is substituted for yf in the above equation for d1 for the situation where the closest pixel produces a variance term which is larger than incr1. Correspondingly, where the variance term is below the range, that is below incr2, the term (1 -xf) is substituted for xf in the above equation for d1. Recomputation in either of these situations provides a revised variance term which is within the range.

In this development, it is assumed that the true line lies in the first octant. It will be apparent, having a knowledge of conventional scan conversion algorithms, such as the Bresenham algorithm, that computations can be made using the same basic algorithm for the other octants, and simply by changing the relative relationships to account for a different slope and incremental progression along the Y axis versus the X axis, as appropriate.

The following pseudocode shows the implementation of the algorithm for a line in the first octant:

```
procedure SCAN_CONV (xb, yb, xe, ye)
        fixed_point     xb, yb, xe, ye;
begin
        integer   d, dx, dy, incr1, incr2, iter,
        xbr, ybr, xer, yer;
        fixed_point xbf, ybf;
```

```
xbr = ROUNDUP (xb);

ybr = ROUNDUP (yb);

xer = ROUNDUP (xe);

yer = ROUNDUP (ye);

dx = xe * UNITY - xb * UNITY;

dy = ye * UNITY - yb * UNITY;

if ( FRACTIONAL_PART ( xb ) > .5 )

    then

        xbf = FRACTIONAL_PART ( xb ) -

            UNITY;

    else

        xbf = FRACTIONAL_PART ( xb );

if ( FRACTIONAL_PART ( yb ) > .5 )

    then

        ybf = FRACTIONAL_PART ( yb ) -

            UNITY;

    else

        ybf = FRACTIONAL_PART ( yb );

incr1 = 2 * dy;

incr2 = 2 * ( dy - dx );

d = 2 * dy - 2 * dy * xbf / UNITY + 2 *

    dx * ybf / UNITY - dx;

if ( d > incr1 )

    then

        begin       (outside the range

            of increments }

            ybr = ybr + 1;

            d = d - 2 * dx;

        end

    else if ( d < incr2 )

        begin       (outside the range

            of increments }

            xbr = xbr + 1;

            d = d + 2 * dy;

        end

iter = xer - xbr;
```

```
        WRITE_PIXEL ( xbr, ybr );
        while ( iter > 0 )
                begin
                        iter = iter - 1;
                        if ( d < 0 )
                                then
                                        d = d + incr1;
                                else
                                        begin
                                                d = d + incr2;
                                                ybr = ybr + 1;
                                        end
                        xbr = xbr + 1;
                        WRITE_PIXEL ( xbr, ybr );
                end
        end
```

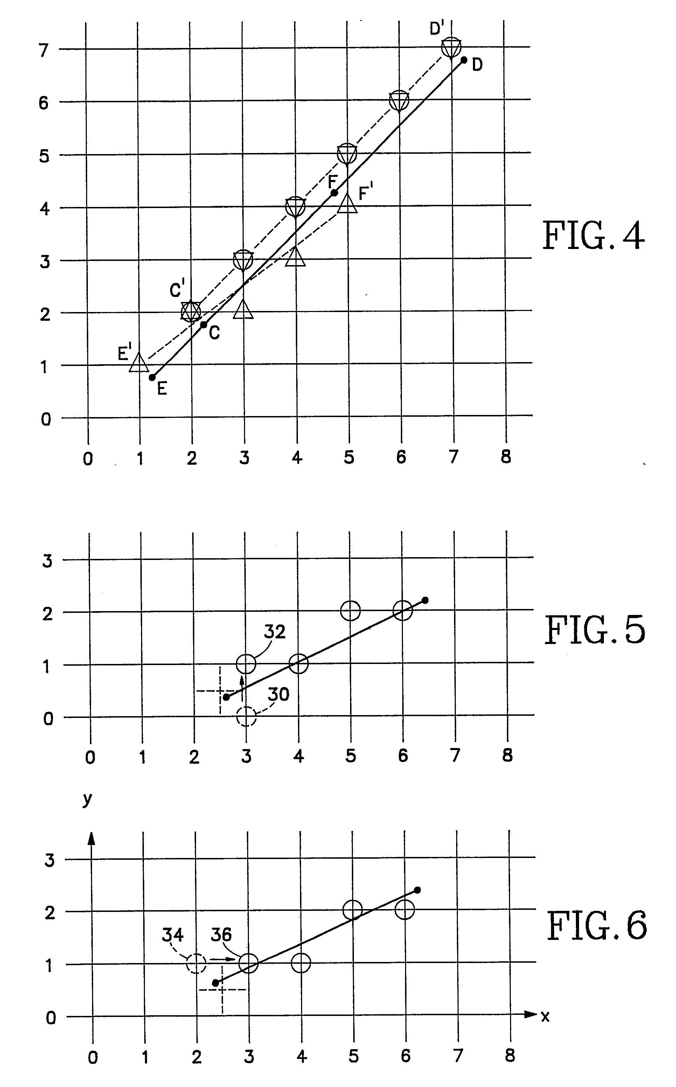

Using the above algorithm, pixel locations for line AB shown in Fig. 1 are also shown for the above algorithm in Fig. 3. It can be seen that these pixel locations definitely lie along true line AB and tend to be equally distribued on both sides of the line. An actual computation will be made with reference to a line shown on Fig. 6.

Fig. 4 illustrates the pixel locations selected for two collinear line segments CD and EF. The pixels located using the Bresenham algorithm are shown by the triangles. Line CD is shifted to become line C'D', and line EF is shifted to become line E'F' using that conventional algorithm.

Using the preferred algorithm of the present invention, just provided, the true lines CD and EF remain the same. The resulting pixel locations are represented by the circles for line CD and by the exes for line EF. It is thus apparent that using the preferred algorithm, the lines remain truly collinear. The lines resulting from the selection using the conventional algorithm are disparate in that they are not collinear so there is a discontinuity between them.

Figs. 5 and 6 illustrate the selection of the first pixel location when the closest pixel location produces a variance value which is outside the range of the increments. In Fig. 5, the true beginning endpoint on the left is within the lower right quadrant of the square between X coordinates 2 and 3 and Y coordinates 0 and 1. The closest coordinate point is represented by circle 30 in dashed lines. The actual initial selected coordinate point is point (3, 1) shown as circle 32. The remaining pixel locations are selected as shown.

Similarly, Fig. 6 illustrates initial coordinate point selection when the true endpoint lies in the upper left quadrant of the same grid area as shown in Fig. 5. Pixel location 34 is the closest. However this produces, as will be seen, an initial variance value which is outside the range of the increments. The actual pixel location selected is pixel location 36.

The computations for the line shown in Fig. 6 using the previously listed pseudocode of the present invention is provided below. Table 1 represents the initial computation of values shown in the pseudocode. In the pseudocode, fractional numbers are really integer numbers with a scale factor. The unity value is the value of one including the scale factor. Table 2 represents the iterations which are made using the pseudocode first to determine the initial coordinate point and then the iterations for determining the subsequent points up to the final point corresponding to the ending endpoint.

### TABLE 1

| | | | |
|---|---|---|---|
| xb = 2.4 | xbr = 2 | dx = 38 | incr1 = 34 |
| yb = 0.6 | ybr = 1 | dy = 17 | incr2 = -42 |
| xe = 6.2 | xer = 6 | xbf = 0.4 | UNITY = 10 |
| ye = 2.3 | yer = 2 | ybf = -0.4 | |

6

TABLE 2

| iter | xbr | ybr | d |
|------|-----|-----|---|
| - | 2 | 1 | -48 (out of range) |
| 3 | 3 | 1 | -14 |
| 2 | 4 | 1 | 20 |
| 1 | 5 | 2 | -22 |
| 0 | 6 | 2 | 12 |

It can be seen that the first calculated variance value, d, is -48, whereas incr2 has a value of -42. Since -48 is out of the range defined by the two increments, another coordinate point must be selected as the initial point. According to the pseudocode the X coordinate is incremented by 1 and the variance code increased by incr1 to produce a coordinate (3, 1) which has a variance value (-14) within the range. This then is the first selected point. The actual selected points according to this algorithm are shown by the coordinate points identified by the solidly lined circles in Fig. 6.

With this algorithm, the endpoints of the lines to be scan converted are represented by fixed point numbers with 'n' bits of fractional precision. All fractional information is used to compute the variance term and increments. This precision is adequate to represent lines exactly across a $2^{(n-1)}$ pixel by $2^{(n-1)}$ pixel bitmap.

The lines which are scan converted are converted more accurately since there are fewer restrictions on the endpoints of the line. That is, for instance, they do not have to lie on integral coordinate points. Further, collinear lines are joined so that they appear to be truly collinear, as shown in Fig. 4. The iteration portion of the algorithm is computed essentially at the same speed as the conventional algorithm. The initialization, that is selection of the initial coordinate point and the computation of the variance value, is slower due to the additional computations required. However, it is significantly more accurate.

It will be appreciated that, although the present invention is described with reference to a specific algorithm and embodied in a particular pseudocode, the present invention can be used in other algorithms and pseudocode, and thus varied in detail, without varying from the spirit and scope of the invention as defined in the claims.

**Claims**

1. A method of converting data defining a straight line on a coordinate grid into a set of integral coordinate points representing the line comprising:
selecting an initial integral coordinate point adjacent to one endpoint of the straight line;
computing a variance value representative of the variance of the initial coordinate point from the straight line;
selecting successive integral coordinate points adjacent the straight line until an integral coordinate point associated with the other end of the straight line is selected; and
for each selected successive integral coordinate point, computing a variance value representative of the cumulative variance of all of the selected coordinate points up to and including the current selected coordinate point.

2. A method according to claim 1 wherein said computing a variance value for the initial coordinate point further comprises determining a range of acceptable variance values, comparing the computed variance value with the range of values, and if the variance value is outside of the range of values, selecting an adjacent coordinate point for which the variance value is within the range of values.

3. A method according to claim 2 wherein said selecting an adjacent coordinate point for which the variance value is within the range of values comprises selecting the integral coordinate point which is toward the other straight line end and is closer to the straight line than the coordinate point having a variance value outside the range of values.

4. A method according to claim 1 wherein said computing an initial coordinate point comprises computing the fractional differences from the one straight line endpoint to the coordinate grid lines associated with the initial selected points, and computing the initial variance value using these fractional differences.

5. A method according to claim 4 wherein the coordinate grid is a two-dimensional coordinate grid which may be defined by coordinates in the x and y axes, and wherein the initial variance value, d, is proportional to $(2 * dy (1 - xbf) - dx (1 - 2 ybf))$, where dy and dx are equal to the difference between the respective coordinate values of the straight line endpoints and xbf and ybf represent the fractional differences from the one straight line endpoint to the coordinate grid lines associated with the initial selected point.

6. An apparatus for printing pixels on a print medium at integral two-dimensional coordinate points representative of a straight line extending between two points on a real two-dimensional coordinate grid, comprising:

memory means for storing data;

means for inputting data defining the two endpoints of the straight line on the coordinate grid into said memory means;

means coupled to said memory means and responsive to the input data for converting the input data into integral coordinate points representative of the straight line by selecting an initial integral coordinate point adjacent to one endpoint of the straight line; computing a variance value representative of the variance of the initial coordinate point from the straight line; selecting successive integral coordinate points adjacent the straight line until an integral coordinate point associated with the other end of the straight line is selected; and for each selected successive integral coordinate point, computing a variance value representative of the cumulative variance of all of the selected coordinate points up to and including the current selected coordinate point;

a printer responsive to a printer data signal for printing an image formed of pixels printed at integral coordinate points on a print medium; and

printer controller means coupled to said computing means and to said printer for generating the printer data signal in response to the integral coordinate data points representative of the straight line for printing pixels on the print medium representative of the straight line.

7. An apparatus according to claim 6 wherein said computing means, in computing a variance value for the initial coordinate point, determines a range of acceptable variance values, compares the computed variance value with the range of values, and if the variance value is outside of the range of values, selects an adjacent coordinate point for which the variance value is within the range of values.

8. An apparatus according to claim 7 wherein said computing means, in selecting an adjacent coordinate point for which the variance value is within the range of values, selects the integral coordinate point which is toward the other straight line end and is closer to the straight line than the coordinate point having a variance value outside the range of values.

9. An apparatus according to claim 6 wherein said computing means, in computing an initial coordinate point, ccmputes the fractional differences from the one straight line endpoint to the coordinate grid lines associated with the initial selected points, and computes the initial variance value using these fractional differences.

10. An apparatus according to claim 9 wherein the coordinate grid may be defined by coordinates in the x and y axes, and wherein the initial variance value, d, is proportional to $(2 * dy (1 - xbf) - dx (1 - 2 ybf))$, where dy and dx are equal to the difference between the respective coordinate values of the straight line endpoints and xbf and ybf represent the fractional differences from the one straight line endpoint to the coordinate grid lines associated with the initial selected points.

FIG.1 (PRIOR ART)

FIG.2

FIG.3

FIG.4

FIG.5

FIG.6